# EUROPEAN PATENT SPECIFICATION

(11) **EP 3 768 971 B1**
(45) Date of publication and mention of the grant of the patent: **05.10.2022**
(21) Application number: 19714540.2
(22) Date of filing: 19.03.2019
(51) Int. Cl.: F03D 13/40

(54) **METHOD AND APPARATUS FOR STABILIZING STACKED WIND TURBINE BLADES**
VERFAHREN UND VORRICHTUNG ZUM STABILISIEREN GESTAPELTER WINDTURBINENSCHAUFELN
PROCÉDÉ ET APPAREIL DE STABILISATION DE PALES D'ÉOLIENNE EMPILÉES

(30) Priority: 23.03.2018 GB 201804666
(43) Date of publication of application: 27.01.2021
(73) Proprietor: VESTAS WIND SYSTEMS A/S, 8200 Aarhus N (DK)
(72) Inventor: KOFMAN, Joris, 9220 Aalborg Ø (DK); KASTRUP, Michael, 8543 Hornslet (DK)
(74) Representative: Vestas Patents Department
(86) International application number: PCT/DK2019/050095
(87) International publication number: WO 2019/179585

(56) References cited:
- EP-A1- 2 487 363
- EP-A1- 2 620 389
- WO-A1-2016/183416
- CN-A- 101 648 539
- ES-A1- 2 609 308

## Description

### Technical Field

This invention relates generally to wind turbines, and more particularly to methods and apparatus for improving the stability of stacked wind turbine blades that are being stored or shipped.

### Background

Wind turbines of the type designed to provide electrical power to a utility grid are quite large, with many designs having a rotor hub height in excess of 100 meters. The turbine blades for these machines can exceed 40 meters in length. The sheer size and weight of these blades present significant logistical challenges in the storage and transportation of the blades for wind turbines.

The blades are typically transported by ship, truck or rail whereby they are supported by cradles or frames. Once on location, the blades may be lifted horizontally with straps or slings placed at various positions along the blade, for mounting to the hub. Generally, during shipment, the blades are held in frames at various positions along their length and are stacked on top of each other and the stacks are also placed side-by-side. Normally, the maximum stack height for large blades (e.g., longer than 50m) that are stored in stackable frames is three (3) blades. In the usual case, the blade frames consist of a tip frame and a root frame, wherein the tip frames support a blade at some portion along the length of the blade, such as a mid-region.

With such multiple-level stacking scenarios, the transportation process tends to present some challenges. For example, transportation by ship tends to subject blades to significant accelerations in a lateral direction, that is, in a direction lateral to the blade axis. This can put additional loads on the frames, both in the form of compressive loads, and shear loads. For stability, it is known to secure stacked elements to a transport or vessel deck with lashings between the blade frames and the deck. The goal of such securement is to stabilize the load in relation to the vessel deck. One example can be seen in US Publication No. 2015/198140. Therein, the surface lashings provide mostly axial stability in a blade frame stack arrangement. ES2609308A1 discloses a fastening system for stacked hollow structures which may be wind turbine tower segments. It comprises modular devices interconnected with each other, which are anchored to flanges located at the ends of hollow structures stacked with a staggered distribution, forming the connection of said modular devices, two opposite reticular structures located in correspondence with two opposite vertical planes where the flanges are arranged. The modular devices are anchored to the flanges of the hollow structures by means of groups of front connection mechanisms that include clips, sliding washers in combination with screws and nuts, at the same time that the devices modular elements are anchored to each other by means of pairs of corner connection mechanisms that comprise male elements and female elements. The modular devices are also anchored to the ends of the hollow structures by means of clamp mechanisms. WO2016183416A1 discloses a system for transporting wind turbine blades which includes a root support structure for supporting a wind turbine blade root and a tip section support structure for supporting a wind turbine blade tip. Each of the root and tip support structures includes upper and lower frames, first and second side frames, a set of upper corner fittings disposed at upper corners of the support structure, and a set of lower fittings disposed at lower corners of the support structure. The sets of corner fittings allow the root and tip support structures to be coupled to vertically or horizontally adjacent root and tip support structures to form an array of support structures for transporting multiple wind turbine blades. The sets of corner fittings also allow for attachment to handling equipment, as well as to reinforcing structures for reinforcing an array of tip support structures. CN101648539A discloses a transport system for transporting at least one wind turbine blade. The blade is provided with a root and a tip. The transport system includes a frame structure for maintaining the root of the blade, and a support device for fixing and supporting the blade between the root and the tip. The frame structure includes a holding device used for supporting a plurality of roots, and the support device is used for fixing a plurality of blades between the root and the tip. EP2487363A1 discloses a lifting system for lifting rotor blades of wind turbines, the lifting system comprising a plurality of frame structures each being configured to support a rotor blade. Additionally, the lifting system comprises a lifting structure which is attachable to a lifting device, and a number of lifting connectors being configured to connect a pack of frame structures to the lifting structure. Furthermore, the invention describes a method for lifting rotor blades of wind turbines by using a lifting device and a method for installation of rotor blades of wind turbines. EP2620389A1 relates to a holding system for holding blades for a wind turbine. The holding system comprises a base frame, a support frame having a first holding section for holding a first blade of the wind turbine and a second holding section for holding a second blade of the wind turbine and a wheel arrangement. The support frame is mounted to the base frame. The wheel arrangement is mounted to the base frame such that the base frame is movable on a ground.

For improved shipping efficiency and reduced cost, it is desirable to stack side-by-side blade stacks higher during transport. However, that is not practically possible with current mounting scenarios and systems. For example, prior art methods of stabilizing blade stacks would require longer lashings between a transport deck and the tops of the higher blade stacks. These longer lashing lengths are subject to greater yield under load, thereby compromising stability of higher blade stacks. Improved methods and apparatuses for handling and stabilizing arrays of stacked and shipped wind turbine blades are therefore desired.

### Summary

The invention relates to systems and methods for transporting a plurality of wind turbine blades includes a plurality of blade root frame elements that are configured for supporting a root portion of a wind turbine blade and are stacked on top of each other to form a plurality of blade stacks that are positioned in a side-by-side fashion with each other so the wind turbine blades may be supported in a stacked array. Bridging elements span between root frame elements of adjacent blade stacks for laterally securing the blade stacks in a side-by-side fashion. Cross-lashing elements span diagonally across root frame elements of adjacent blade stacks and are coupled to the root frame elements for increasing the stiffness of the blade stacks in the stacked array.

A system according to the invention is defined in appended independent claim 1. Further preferred features thereof are defined in subclaims 2-5. A method according to the invention is defined in appended claim 6. Further preferred features thereof are defined in subclaims 7-11.

### Brief Description of the Drawings

The accompanying drawings, which are incorporated in and constitute a part of this specification, illustrate embodiments of the invention and, together with the summary of the invention given above, and the detailed description of the drawings given below, serve to explain the principles of the present invention.
Fig. 1 is a perspective view of an exemplary tip frame element for securing a blade of a wind turbine that may be used in implementing the current invention.
Fig. 2 is perspective view of an exemplary root frame element for securing a blade of a wind turbine that may be used in implementing the current invention.
Fig. 3 is a perspective view of an array of side-by-side stacked frame elements for securing blades of wind turbines that may be used in implementing the current invention.
Fig. 4 is a perspective view of an array of side-by-side stacked frame elements in an array incorporating an exemplary embodiment of the current invention.
Fig. 5A is a front schematic view of an array of side-by-side stacked frame elements as shown in Figure 3 and incorporating an exemplary embodiment of the current invention.
Fig. 5B is a front schematic view of an array of side-by-side stacked frame elements incorporating another exemplary embodiment of the current invention.
Fig. 6 is a top schematic view of opposing arrays of side-by-side stacked frame elements securing blades of wind turbines and implementing an exemplary embodiment the current invention.
Fig. 7 is a front schematic view of an array of side-by-side stacked frame elements as used in Figure 6 and incorporating another exemplary embodiment of the current invention.
Fig. 8 is a front schematic view of an array of side-by-side stacked frame elements incorporating an exemplary embodiment of the current invention.
Figs. 9A-9C are additional a front schematic view of arrays of side-by-side stacked frame elements incorporating other exemplary embodiments of the current invention.

### Detailed Description

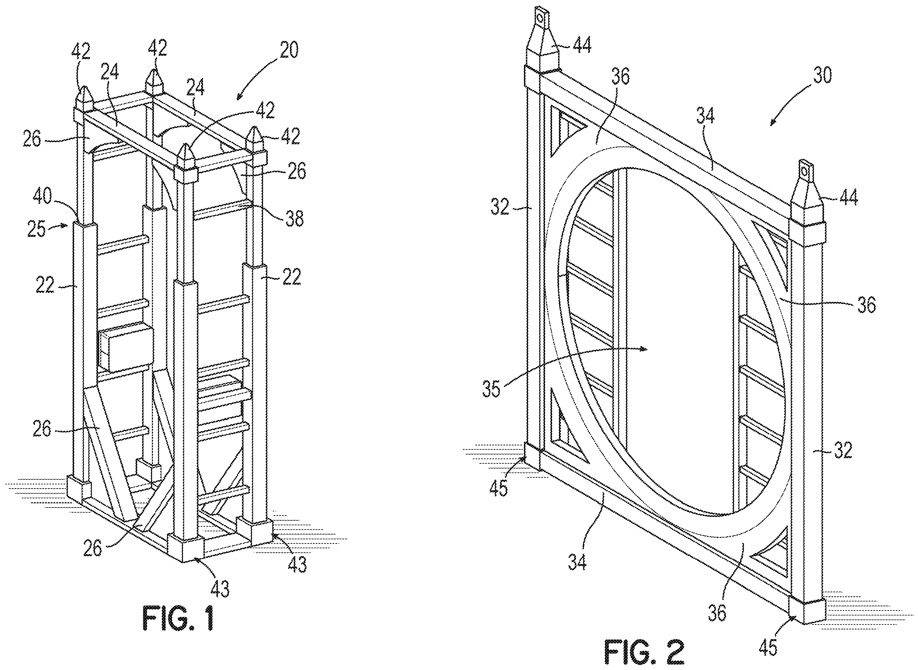

Figures 1 and 2 illustrate exemplary embodiments of blade frame elements or structures that may be used in stacked arrays for transporting stacked wind turbine blades in accord with the invention. Such frame elements are implemented generally at the ends of the blades (e.g., the root end) and also somewhere at a section or portion along the length of the blades for suitable support of a blade in transit. Such frames may take a variety of shapes and thus the specific embodiments illustrated herein are not limiting with respect to the invention and the improvements provided thereby. Such frame elements are also configured for being stacked on top of each other to form blade stacks that are then positioned next to each other in a side-by-side fashion to form the arrays that support the blades as discussed herein.

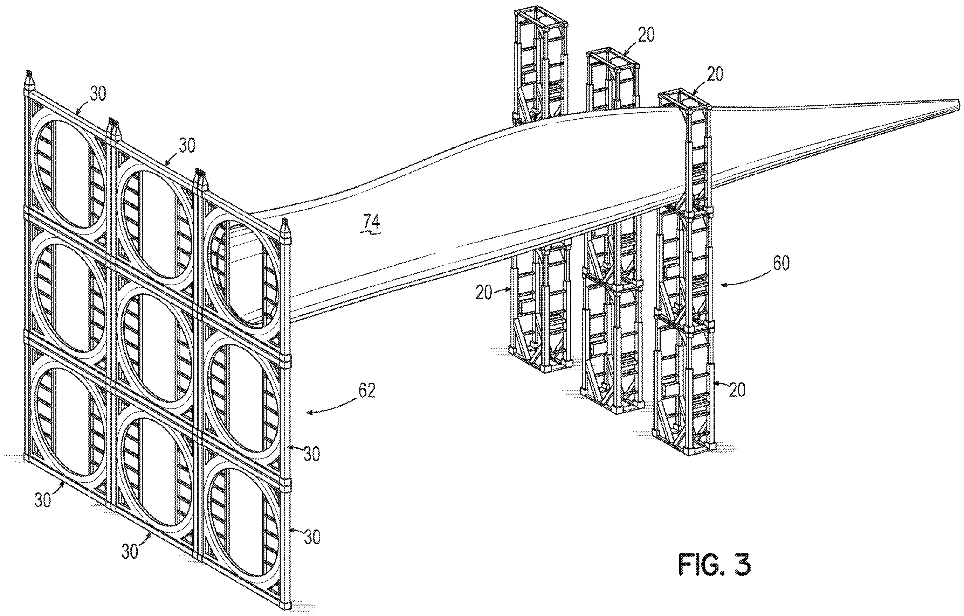

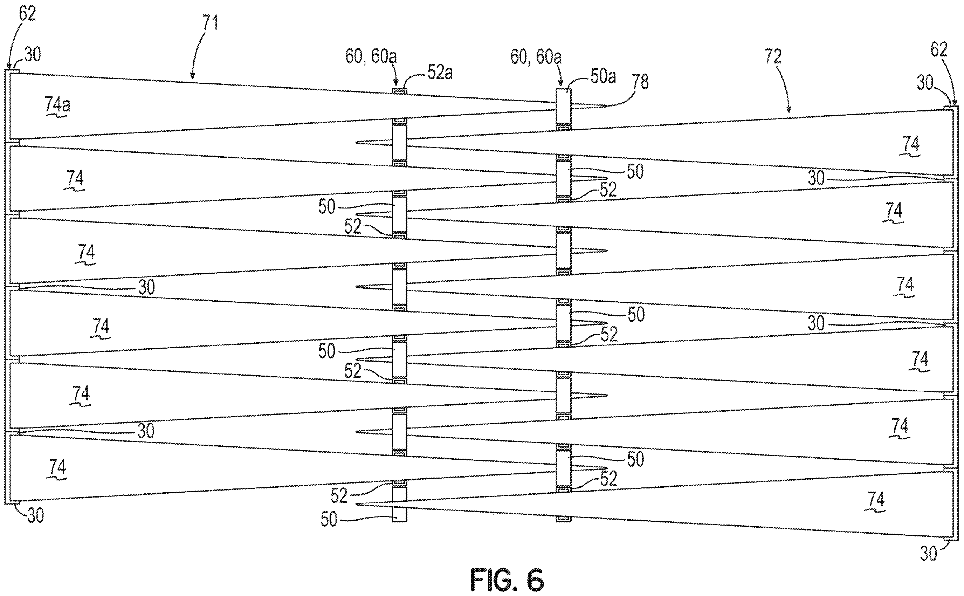

Generally, the end of a blade that attaches to the wind turbine or root end of the blade has a circular cross-section and will be supported by a root frame element 30 as illustrated in Figure 2. Along the length of the blade, and preferably around a mid-region portion of the blade, a tip frame element 20, as illustrated in Figure 1, might be utilized. As seen in the Figures, the tip frame element will generally be configured for supporting a flattened body section/portion or tip section/portion of a blade that passes through the tip frame element. Generally, a plurality of tip frame elements 20 and root frame elements 30 might be stacked in parallel stacks and utilized in an array or grid arrangement for supporting multiple blades together as illustrated in Figures 3 and 6.

The exemplary blade frame elements 20 and 30 as illustrated have upright elements 22, 32 and cross elements 24, 34 that are arranged in a generally rectangular fashion. Within the defined rectangular frame may be other spanning elements 26, 36 which are configured to define an appropriately-shaped opening 25, 35 that aligns with the cross-sectional shape of the wind turbine blade that is to be supported. The root frame element 30 might define a circular opening 35 for interfacing with the circular cross-section of the root end of the blade. The blade root end with no generally pass through the frame element and so the depth of the root frame element is less than the top frame element 20. As illustrated in Figure 1, the tip frame element 20 may define a narrow but tall opening 25 for receiving a blade on its side and since the blade passes through frame element 20, the tip frame element 20 might also include multiple sets of upright elements and cross elements and other structural elements 38 that span between the sets of upright elements 22 to yield a frame of a desired depth to support a section of the blade along some length position of the blade. Also, the tip frame 20 and particularly upright elements 22 might telescope at an interface 40 for varying the height of the tip frame to accommodate different blade sizes. The frame elements 20, 30 are formed of a suitably strong material, such as metal for supporting the blades.

Turning now to Figure 3, various of the frames are shown in a stacked arrangement to form a plurality of blade stacks. To that end, each of the frames may include alignment structures 42, 44 that fit into openings or apertures 43, 45 so the frames may be stacked as illustrated in Figure 3. The blade stacks can then be placed side-by-side to form arrays 60, 62 that support effectively a three-dimensional group of blades as shown in Figure 3. Generally, the stacked frame arrays 60, 62 might then be lashed down to a deck or other support surface.

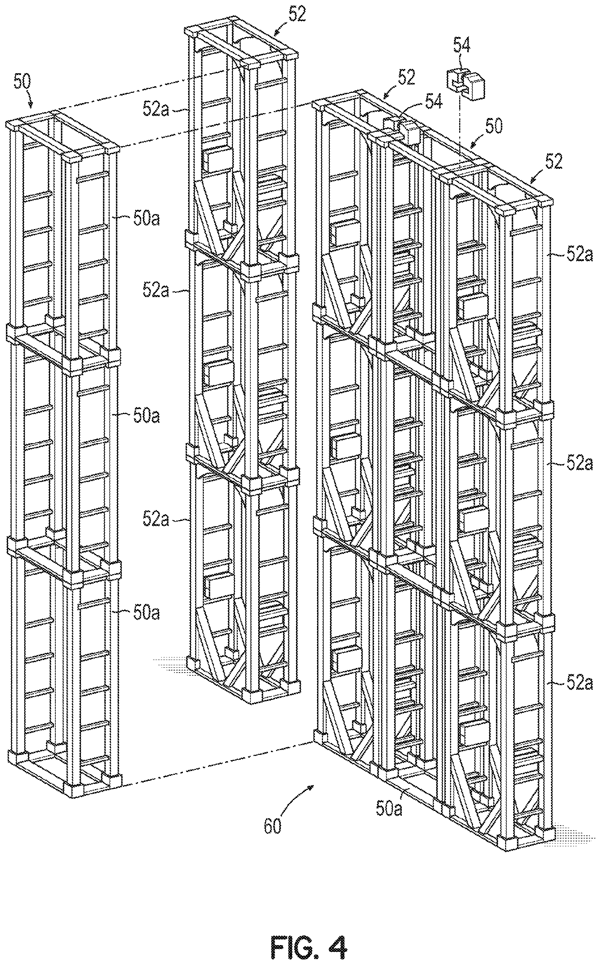

Referring now to Figure 4, one embodiment of the invention incorporates stabilizing frame elements that are positioned between adjacent blade elements for increasing the overall stability of the stacked array, such as a stacked array of tip frames 60. More specifically, a plurality of stabilizing frame elements are stacked on top of each other to form a stabilizing stack and the stabilizing stack is positioned between at least two blade stacks and laterally secured to the blade stacks in a side-by-side fashion for stabilizing the stacked array. The stabilizing frame element, in one exemplary embodiment, may take the form of an unoccupied frame element, such as an unoccupied tip frame element 20 that is implemented between occupied tip frame elements in the blade stacks that support a portion of the blade. More specifically, as illustrated in Figure 4, stacks 50 of frame elements, considered stabilizing frame elements, that are configured to form a frame, are position between adjacent stacks 52 of other frame elements, which are configured for being occupied and supporting a blade. The stabilizing frame elements may or may not be configured for supporting a portion of a wind turbine blade, but one primary purpose in accordance with embodiments of the invention is to increase stability in the stacked array. More specifically, a stack of unoccupied frame elements (unoccupied stack or stabilizing stack) will be interposed between various occupied stacks 52 of blade frame elements.

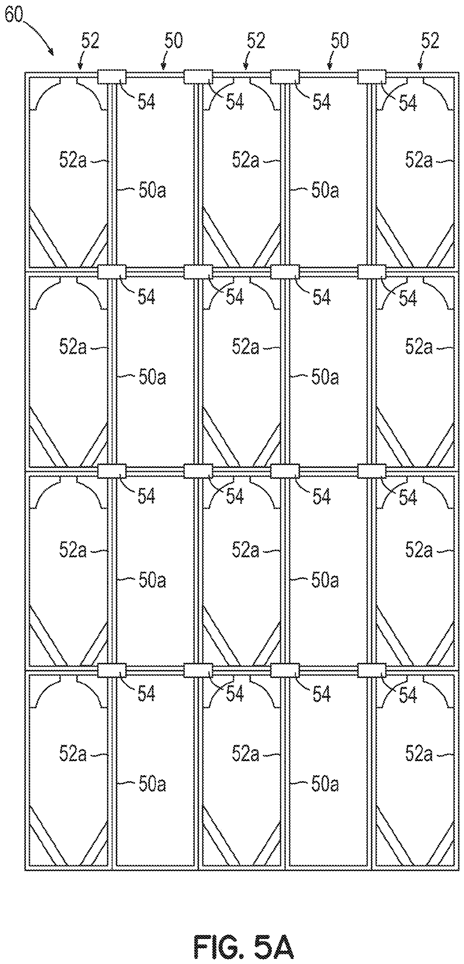

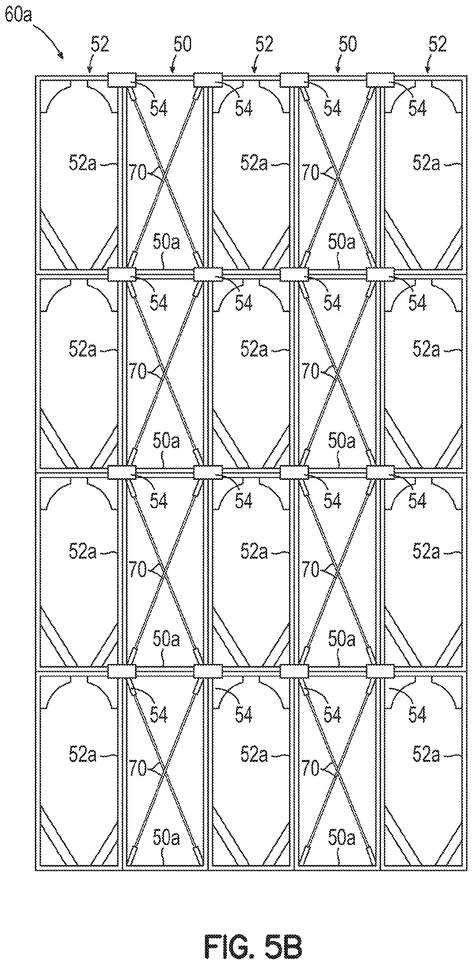

In accordance with one embodiment of the invention, the stabilizing stacks 50 may be laterally secured with the blade stacks 52, such as by being connected to adjacent occupied blade stacks 52 using appropriate connectors. One suitable connector for laterally securing the stacks 50, 52 are bridge connectors 54 as illustrated. The connectors 54 might be used to attach the top and bottom of each frame element to other adjacent and top/bottom frame elements as shown in Figures 5A and 5B for example. Referring to Figure 1, in one embodiment of the invention, while a typical tip frame element 20 might incorporate other structures 26 for cradling or securing a portion of a blade, the individual stabilizing frame elements 50a might be more simply constructed to essentially form the rectangular frame element but not otherwise be configured for supporting a blade since those elements 58 will not be utilized to cradle or support a portion of a blade in one embodiment. Alternatively, blade frame elements similar to element 20 shown in Figure 1 might be used to be a stabilizing frame element as well, but just left empty or unoccupied in use.

The unoccupied stacks 50 of frame elements 50a provide additional stabilizing elements to the tip frame element array 60 as shown in Figures 3 and 4. Because the number of blades is the same, there is not a significant increase in the load. Furthermore, the additional stabilization does not rely upon increased securement or lashings between stack frames of the array 60 and a transport surface such as the deck of a ship. The arrangement of occupied and unoccupied frame elements 50a, 52a, such as tip frame elements as illustrated in Figure 4 and the formed stacked array 60 provides greater stability to the stack by reducing shear loads under lateral accelerations and also by reducing compressive loads under lateral accelerations.

In accordance with one feature of the invention, the inventive arrangement allows the individual stacks 50, 52 within an array 60 to be stacked higher, such as by adding another level to handle more blades in the array. This provides for greater efficiency and shipment of the blades to an installation site.

As illustrated in Figure 5A, a front perspective view of an array 60 is illustrated having essentially three occupied stacks 52 of blade frame elements for containing blades separated by two unoccupied, stabilizing stacks 50 of frame elements. Each of the stacks is stacked four levels or four blades high as illustrated. While various of the illustrative Figures show arrays with frame stacks that go up four levels or four blades, a greater or lesser level of levels might be utilize in the enhanced frame array while realizing the same benefits of embodiments of the invention disclosed herein. Further, the widths of the arrays may vary from those shown in the Figures, such as Figures 5A, 5B. Referring to Figures 5A, 5B, as noted, the occupied stacks 50 may include frame elements 52a that are configured for receiving a shaped blade portion. However, the frame elements 50a of the stabilizing stacks 50 may or may not incorporate structures for securing or cradling a portion of a blade, because they will remain unoccupied.

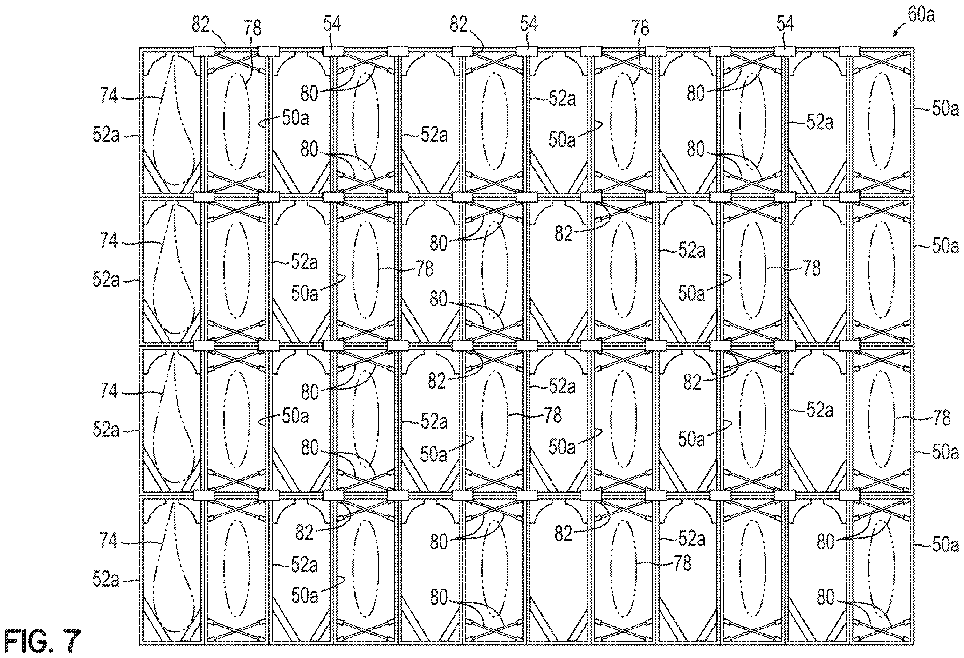

Figure 5B illustrates a further alternative embodiment for increasing stability of an array 60a of frame elements as discussed with respect to stabilizing stacks 50 of frame elements 50a. Specifically, the unoccupied, stabilizing frame elements 50a are reinforced with diagonal lashing elements 70 as shown in Figure 5B. The diagonal lashing elements 70 span across at least one side or face of the stabilizing frame elements and generally diagonally across the frame elements 50a. In the embodiment illustrated in Figure 5B, the diagonal lashing elements 70 generally span from one opposing corner to the other diagonal opposing corner and from top to bottom on at least one side of the stabilizing frame element. That is, for example, from an upper left-hand corner to a lower right-hand corner or from upper right-hand corner to a lower left-hand corner. The points of attachment for the diagonal lashing elements 70 are in the corners of the stabilizing frame element. In another embodiment, similar diagonal lashing elements 70 might be used on the other side or on both sides/faces of the stabilizing frame elements for further stability. Figure 5B shows one face side view of the stacked array, but the other face side might also use similar diagonal lashing elements 70. While Figure 5B shows the diagonal lashing elements going from corner to corner, in other embodiments of the invention, the attachment points for the diagonal lashing elements might be offset from at least one of the specific corners of the rectangular frame element as shown in Figure 5B. For example, Figure 7 illustrates other positioning of the diagonal lashing elements.

Suitable diagonal lashing elements, for example, might include at least one of cables or chains, or other spanning elements that can be tensioned to provide further stability to the stabilizing frame elements 50a. The diagonal lashing elements might use one or more turnbuckles for tensioning. In accordance with one feature of the invention, the combination of the diagonal lashing elements 70 in the stabilizing frame elements along with bridge connector elements 54 between the blade frame stacks and stabilizing stacks increase the overall stiffness of the stack array 60a as illustrated.

In accordance with another embodiment of the invention incorporating stacked frame arrays such as those illustrated in Figures 4 - 5B, a stacked array and the stabilizing frame elements 50a within unoccupied, stabilizing stacks 50 of the array might be staggered with respect to another stacked array in order to overlap blades 74 in an interlocking relationship so that opposing stacked arrays of blades 74 may be arranged with the tip of the blades of a first array passing generally unsupported through an unoccupied, stabilizing frame element 50a of a second array. More specifically, Figure 6 shows a first stacked array/group 71 of stacked blades opposing a second stacked array/group 72 stacked blades with the blades extending in opposite directions. The arrays, which might resemble arrays 60 or 60a, may be positioned in a staggered fashion such that unoccupied, stabilizing frame elements 50a of one array are generally opposite and linearly aligned with an occupied frame element 52a of the opposite array. The alignment is generally along an axis defined by the axis of the stacked blades 74. Multiple blades are supported in a particular group 71, 72 by respective stacked arrays 62 of root frame elements 30 and stacked arrays 60, 60a of tip frame elements 50, 52.

Referring to Figure 6 and blade 74a, the base/root of the blade is supported by a root frame element 30 within array 62. Another portion of the blade is supported by a tip frame element 52a of an array 60, 60a of tip frame elements as shown. Then, the unsupported tip 78 of blade 74a extends into an aligned and unoccupied stabilizing frame element 50a of an opposing array 60, 60a of array group 72 that contains and another plurality of blades. In that way, the blade 74 of opposing arrays of 70, 72 are interlocked and can be positioned closer together as the stabilizing stacks 50 do not interfere with the blade tips 78. The staggering allows the tips 78 of the blades to occupy the otherwise unoccupied frame elements 58, without being supported by the frame element. As may be appreciated, the opposing and interlocking pluralities of blades in respective groups 71, 72 provide significant space savings because the arrays 60, 60a of root frame elements are laterally staggered with respect to each other and the blades may be positioned closer to each other in an interlocking fashion. As noted, the arrays 60, 60a may include frame elements is illustrated in Figures 5A and 5B, for example in accordance with the invention.

In accordance with another embodiment of the invention, the spanning elements might be arranged to reduce interference with the unsupported blade tips 78. Reference is made to Figure 7 which illustrates in front perspective view, an array of 60a of stabilizing frame elements wherein the diagonal lashing elements are positioned diagonally within the unoccupied frame elements but do not extend from corner to opposing corner. Figure 7 also illustrates an embodiment of an array 60a which incorporates multiple sets of diagonal lashing elements incorporated with the stabilizing frame elements.

Referring to Figure 7, an array 60a frame elements is shown with unsupported blade tips 78 illustrated in phantom in the unoccupied frame elements 58. In accordance with one embodiment of the invention incorporating diagonal lashing elements 70, the unoccupied tip frame elements 58 incorporates diagonal lashing elements shown with numeral 80. These diagonal lashing elements 80 do not extend from diagonal corner to diagonal corner but rather extend diagonally across portions of the unoccupied frame elements 50a. While one end of the diagonal lashing element may originate in a corner 82 of the frame element, and be secured thereto, the other end of the diagonal lashing element 80 might be extend to an opposite side of the frame element and be secured to the side of the frame element, such as to an upright member 22 of the frame element. That is, the diagonal lashing elements while extending diagonally within the frame element are not position so as to extend from one corner to an opposing diagonal corner as illustrated in Figure 5B with diagonal lashing elements 70. Similarly, the diagonal lashing elements 80 might not be secured at either corner and may simply extend in a diagonal fashion across the frame elements from one side to the other, such as from one upright member 22 to another upright member. The positioning of the diagonal lashing element 80 as shown in the array 60a Figure 7 is selected so as to open an area within the unoccupied frame elements 50a to receive an unsupported tip 78 of the blade without interfering with the diagonal lashing elements 80. The diagonal lashing elements 80 may be positioned proximate to the top of the frame element and the bottom of the frame element 50a as shown in Figure 7 in order to clear and open space to receive the blade tips 78 while still providing the desired increase in stabilization and overall stiffness of the stacked array of framed elements. Accordingly, the array 60a as illustrated in Figure 7 might be implemented as illustrated in Figure 6 where offset and opposing groups of supported blades 74 are placed together such as on the deck of a ship or other vehicle transporting the blades. In the arrangement illustrated Figure 7, although not shown for all the frame elements, portions of blades 74 will occupy the frame elements 52a like is shown in Figure 3. Referring to the left side of Figure 7, portions of the blades 74 are shown supported in an occupied column of stacked tip frame elements 52a. As will be understood by person of ordinary skill in the art, the other frame elements 52a will also support a portion of a blade 74 along its length as illustrated in Figure 6 only one column is shown in figure 7 for illustrative purposes. As will be understood with reference to Figure 6, the blades 74 and blade tip 78 will generally be extending in opposite directions.

As may be appreciated, various improvements of the invention may be selectively mixed together within certain arrays of stacked frame elements, whether root frames or tip frames as illustrated and discussed herein. Accordingly, features such as utilization of unoccupied stack frame elements, diagonal lashing elements, bridging connectors between the stack frame elements and other features are not exclusive and can be mixed and matched in various, combinations as desired in accordance with the invention as defined by the appended claims.

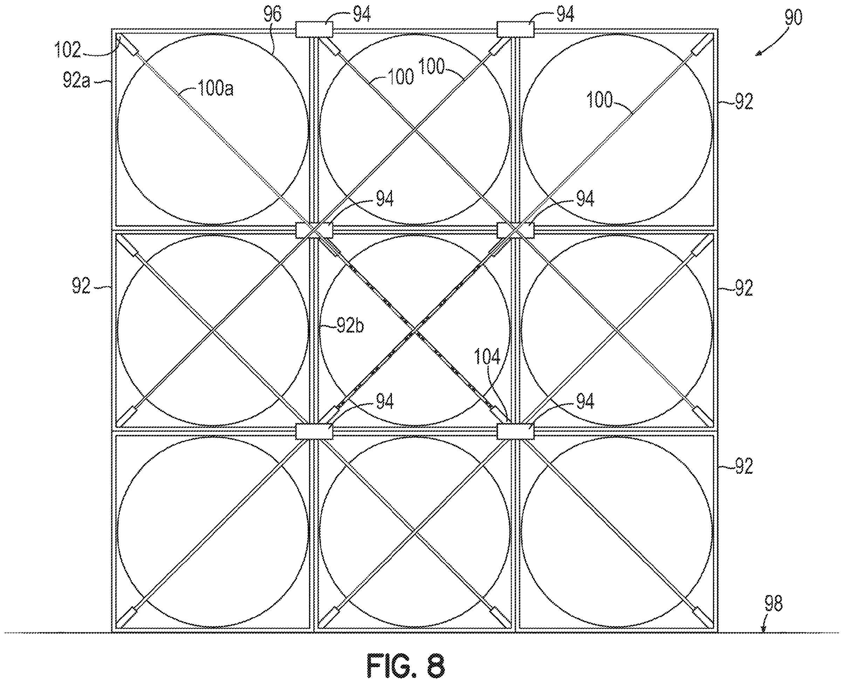

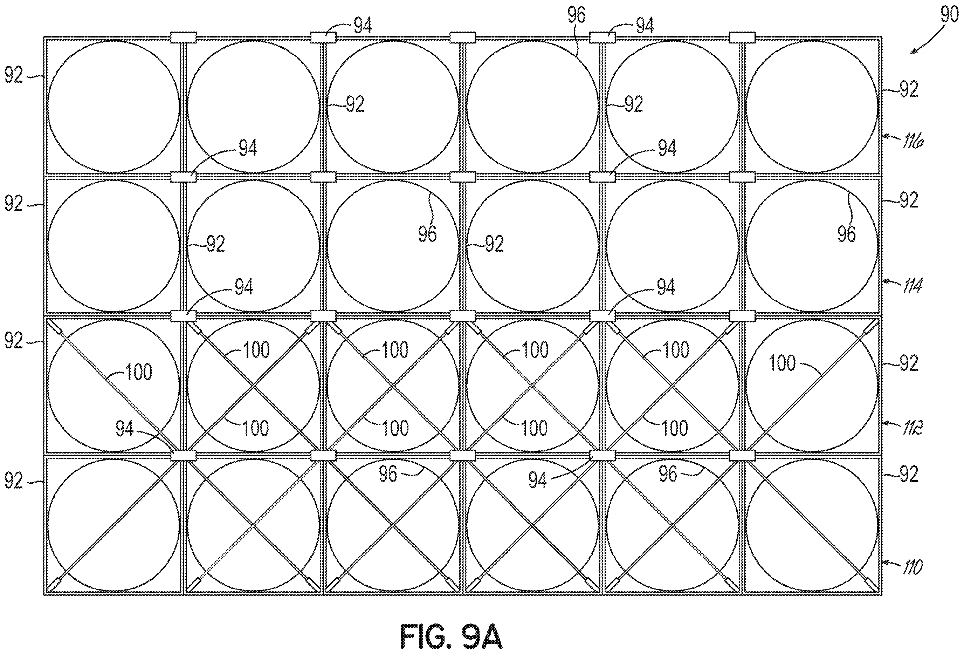

Referring now to Figure 8, the invention is illustrated in the form of an array 90 of stacked root frame elements that are enhanced and strengthened for the purpose of increasing the overall stiffness of a stacked array in accordance with features of the invention. Specifically, array 90 includes a plurality of stacked root frame elements 92, such as root frame elements 30 as illustrated in Figure 2. Figure 8 illustrates a perspective front view to show features of the invention incorporated with stacked array 90. Specifically, bridging connector elements 94 are utilized between individual root frame elements 92 to connect the root frame elements, such as at their corners, to adjacent root frame elements. Such bridging connector elements 94 may take the form of known bridging elements to connect frame elements 92 together (See Figure 4). Illustrated in Figure 8, each of the frame elements 92 is configured to contain and support the root end 96 of a wind turbine blade within the support system for multiple stacked blades as illustrated in Figure 3. The array 90 shown in figure 80 is a 3x3 array of elements, but a greater or lesser number of root frame elements 92 might be utilized such as illustrated in Figures 9A-9C. The individual root frame elements 92 are coupled together with the bridging connector elements 94 so as to present a unitary structure and thus further enhance the stiffness of the array 90 of stacked root frame elements 92. Generally, in one embodiment of the invention, the bridging connector elements are implemented between the blade frame elements 92 but not between the frame elements and a support surface, such as a deck 98 as illustrated in Figure 8.

In accordance with the invention, additional stiffness is achieved between the individual blade frame elements 92 by cross lashing elements 100 that connect various adjacent blade frame elements 92 together. As illustrated in Figure 8, the blade frame elements 92, such as root frame elements, are generally placed at the root face of the blade root or end 96. The frame elements 30, as illustrated in a perspective view in Figure 2 would receive the blade root in one face of the frame element and the blade would extend axially outboard of that face of the frame element. The cross lashing elements might be secured on the axial outboard side of the frame element 30, 92 so as not to interfere with the blade root end 96.

A cross lashing element 100 would be positioned to extend between adjacent root frame elements 92 so as to couple at least two adjacent root frame elements together diagonally. As illustrated, the cross-lashing elements 100 are shown to extend diagonally between two diagonally adjacent root frame elements 92. For example, they may extend from one upper diagonal corner of an upper root frame element to the lower diagonal corner of the lower adjacent frame element. Referring to Figure 8, frame elements 92a and 92b will be referred to for illustration. Those frame elements are connected by the cross-lashing element 100a which extends from an upper left-hand corner 102 of root frame element 92a and extends to the lower right-hand corner 104 of root frame element 92b. Such cross-lashing elements 100 may be secured appropriately at those corners to span between the root frame elements and provide additional stiffness to the array 90. The cross-lashing elements 100 might be suitably strong metal elements, such as cables or lengths of chain which can be tightly and securely applied between the corners 102, 104 for example to provide stiffness. The cross-lashing elements 100 shown in Fig. 8 are secured between just two root frame elements 92 so as not to be too long and yielding and thereby provide the desired stiffness to the array of stacked frame elements 90. However, a greater number of frame elements might be secured together by the cross-lashing elements in accordance with the invention. As illustrated in Figure 8, depending on a positioning of a particular root frame element 92, certain cross lashing elements 100 overlap with other cross lashing elements 100 secured to the root frame element 92, as illustrated by the center-most root frame element 92b. The center-most root frame element 92b, as shown in Figure 8, might be coupled with multiple adjacent frame elements 92 at the same time. In the case of cross lashing elements 100 that only span diagonally across two adjacent blade stacks, the root frame element 92b might be coupled with 4 different other diagonal frame elements 92. The cross-lashing elements 100 are secured between adjacent root frame elements 92 to increase the stiffness of the overall array but generally are not secured to deck 98. Rather, the overall array 90 might be secured to the deck 98 in some other fashion.

Referring to Figures 9A-9C root frame elements 92 may be stacked and cross lashed in accordance with the invention for creating stacked arrays 90 that are both wider as well as higher than the array illustrated in Figure 8. Furthermore, it may not be necessary to provide cross lashing elements 100 between all of the adjacent root frame elements to achieve the desired stiffness of the stacked array of frame elements. For example, referring to Figure 9A, the lower rows 110, 112 and the frame elements 92 therein might be secured together with cross lashing elements 100 as discussed with respect to Figure 8.

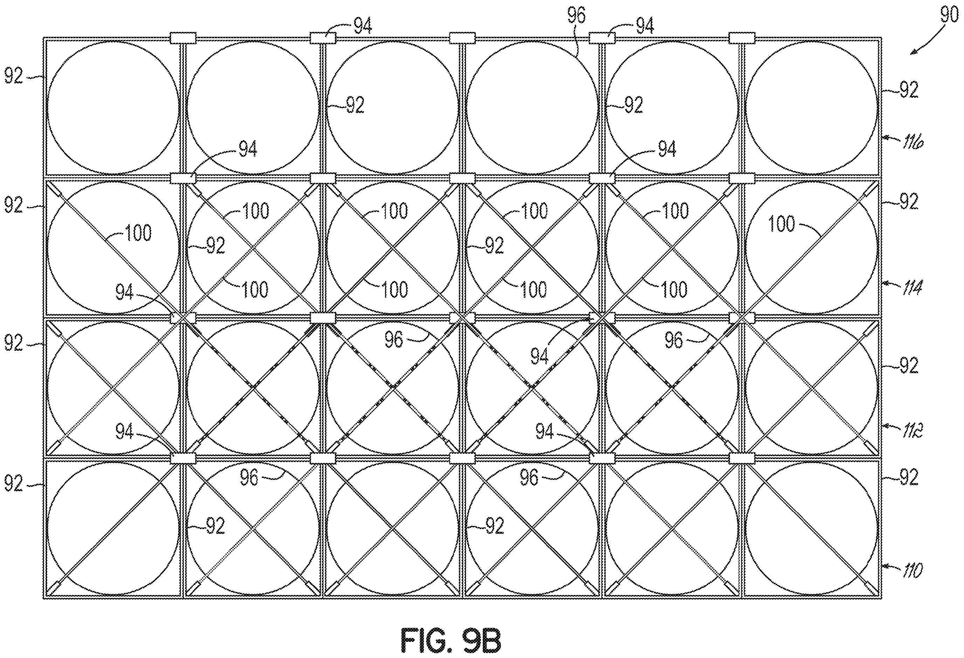

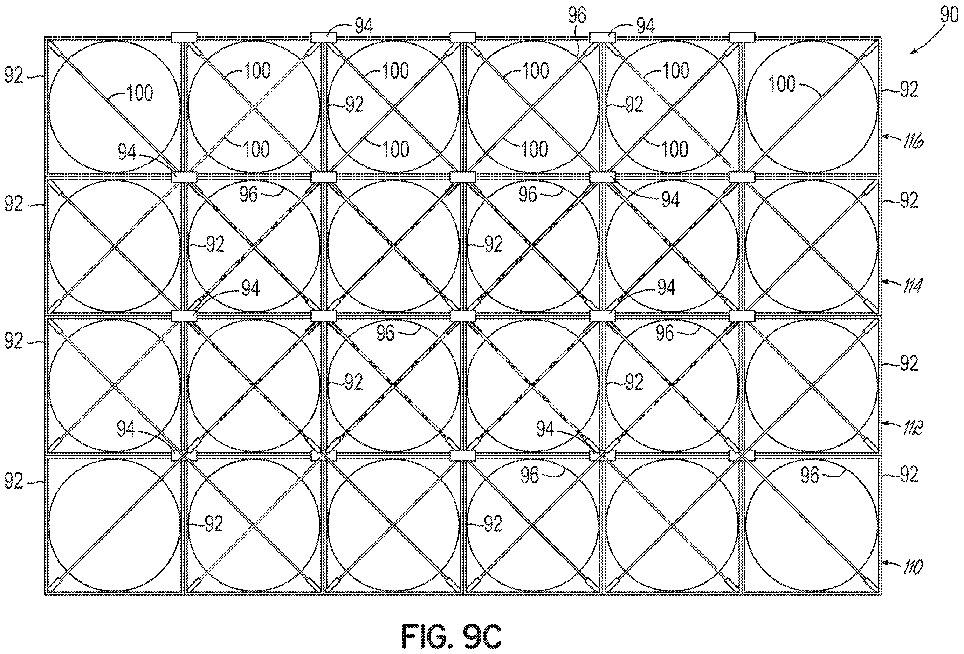

Alternatively, the array 90 of Figure 9B might also couple row 114 to the frame elements of adjacent row 112 with cross lashing elements 100. Similarly, as illustrated in Figure 9C, all of the rows 110-116 might be secured with cross lashing elements 100 to frame elements 92 of lower rows as discussed with respect to the Figure 8.

As may be appreciated, the various improvements provided by embodiments in the invention may be utilize individually or together as noted herein. For example, the arrays 90 as illustrated in Figures 8-9C may be incorporated with tip frame element arrays as discussed with respect to Figures 4-5B and the arrangements of Figures 6 and 7. The improved stiffness of the stacks provided by the invention will enable the use and reuse of the arrays of stacked blade frame elements for handling larger and heavier blades with stacks at a greater height. Such an invention provides significant economic savings by being able to place more blades in a transport vessel, such as a ship, and eliminates the need to invest in new systems for transporting the larger heavier blades. Therefore, additional rows of stacked blades might be added to the overall system and the size and weight of the blades might be increased and still used with existing stacked frame arrays while eliminating and reducing various of the bending stresses that are experienced during shipment.

## Claims

1. A system for transporting a plurality of wind turbine blades comprising:
a plurality of root frame elements (30, 92) that are configured for supporting a root portion of a wind turbine blade, the root frame elements (30, 92) stacked on top of each other to form a plurality of blade stacks that are positioned in a side-by-side fashion with each other so wind turbine blades may be supported in a stacked array (62, 90);
at least one bridging element (54, 94) spanning between a root frame element (30, 92) of one blade stack and a root frame element (30) of an adjacent blade stack for laterally securing the blade stacks in the side-by-side fashion;
at least one cross lashing element (100) spanning diagonally across diagonally adjacent root frame elements (30, 92) of adjacent blade stacks and coupled to the said diagonally adjacent root frame elements (30, 92) of the adjacent blade stacks for increasing the stiffness of the blade stacks in the stacked array (62, 90), and wherein at least one root frame element (30, 92) is coupled to multiple diagonally adjacent root frame elements (30, 92) by cross lashing elements (100), wherein at least one root frame element (30, 92) is coupled to multiple diagonally adjacent frame elements (30, 92) of multiple adjacent blade stacks by cross lashing elements (100), the system is **characterized in that** the cross-lashing element (100) spans diagonally across root frame elements (30, 92) of at least two adjacent blade stacks to couple at least two adjacent root frame elements (32, 90) together diagonally and a root frame element (30, 92) of an array (90) includes cross-lashing element (100) which overlaps with one or more other cross lashing elements (100) secured to the said root frame element (30, 92).

2. The system of claim 1 wherein said cross-lashing elements (100) are suitably strong metal elements, such as cables or lengths of chain.

3. The system of any of claims 1-2 wherein a root frame element (30, 92) of an array (62, 90) is coupled with four other diagonally adjacent frame elements (30, 92) in an array by means of cross-lashing elements (100) which only span diagonally across two adjacent blade stacks.

4. The system according to any previous claim, said system further comprising a plurality of tip frame elements (20, 52) configured for supporting a portion of a wind turbine blade along the length of the blade, said tip frame elements (20, 52) stacked on top of each other to form a plurality of tip frame stacks that are positioned in a side-by-side fashion with each other so wind turbine blades may be supported in a stacked array (60);
said system further comprising a plurality of stabilizing frame elements (50a) stacked on top of each other to form at least one stabilizing stack (50);
the at least one stabilizing stack (50) positioned between at least two tip frame stacks (52) and laterally secured to the tip frame stacks (52) in a side-by-side fashion for stabilizing the stacked array (60); said system preferably comprising a plurality of stabilizing stacks (50), each stabilizing stack (50) positioned between at least two tip frame stacks (52) and laterally secured to the tip frame stacks (52) in a side-by-side fashion.

5. The system according to claim 4, said wherein at least one stabilizing frame (50a) is formed by at least one diagonal lashing element (80) that spans across a portion of the stabilizing frame element (50a) for increasing the stiffness of the stabilizing frame element (50a).

6. A method of transporting a stacked array (62, 90) of wind turbine blades (74) by means of a system per any previous claim, said method comprising:
securing blades (74) in a plurality of stacks with a portion of each blade supported in a blade root frame element (30, 92), the blade frame elements stacked on top of each other to form a plurality of blade stacks;
positioning the blade stacks in a side-by-side fashion with each other to form a stacked array (62, 90) of blades (74);
coupling at least one root frame element (92) of said array (62, 90) to one or more diagonally adjacent frame elements (30, 92) by cross-lashing elements (100).

7. The method according to claim 6, wherein said cross-lashing elements (100), secured between adjacent root frame elements (30, 92) to increase the stiffness of the overall array (62, 90), and are not secured to a support surface such as a deck (98).

8. The method according to claim 7, wherein said array (62, 90) is secured to a said deck (98) by securing elements which are additional to said diagonal cross-lashings (100) coupled to said root frames (30, 92).

9. The method according to any claim 6-8, further comprising:
securing a plurality of stabilizing frame elements (50a) on top of each other in a stack to form at least one stabilizing stack (50);
positioning at least one stabilizing stack (50) between at least two tip frame stacks (52) of the array (20), and laterally securing the stabilizing stack (50) to the tip frame stacks (52) in a side-by-side fashion for stabilizing the stacked array (60); and
laterally securing the adjacent tip frame stacks (52) and stabilizing stacks (50) in a side-by-side fashion.

10. The method according to claim 9, further comprising:
securing a first set of blades (74) in a plurality of stacks (52) with a portion of each blade supported in a blade frame element (52a), the blade frame elements (52a) stacked on top of each other to form a first array (60) of the plurality of blade stacks (52);
securing a plurality of stabilizing frame elements (50a) on top of each other in a stack to form at least one stabilizing stack (50) and positioning and securing at least one stabilizing stack (50) between at least two blade stacks (52) of the first array (60) in a side-by-side fashion for stabilizing the first array;
securing a second set of blades (74) in a plurality of stacks with a portion of each blade supported in a blade frame element (52a), the blade frame elements stacked on top of each other to form a second array (60) of the plurality of blade stacks;
orienting the second array so tips of blades (74) of the second set of blades are positioned in stabilizing frame elements (50a) of the first array; and further comprising:
securing a plurality of stabilizing frame elements (50a) on top of each other in stacks to form at least one stabilizing stack (50) and positioning and securing at least one stabilizing stack (50) between at least two blade stacks of the second array in a side-by-side fashion for stabilizing the second array;
orienting the first array so tips of blades (74) of the first set of blades are positioned in stabilizing frame elements (50a) of the second array.

11. The method according to any claim 6-10, said method including securing blades (74) in a plurality of stacks that have a stack height of four or more blades; and positioning the blade stacks (52) in a side-by-side fashion with each other to form a stacked array (60, 62, 90) having a height of four or more blades.

## Patentansprüche

1. System zum Transportieren einer Vielzahl von Windkraftanlagenblättern, umfassend:
eine Vielzahl von Wurzelrahmenelementen (30, 92), die so konfiguriert sind, dass sie einen Wurzelabschnitt eines Windkraftanlagenblatts tragen, wobei die Wurzelrahmenelemente (30, 92) übereinander gestapelt sind, um eine Vielzahl von Blattstapeln zu bilden, die nebeneinander positioniert sind, so dass Windkraftanlagenblätter in einer gestapelten Anordnung (62, 90) getragen werden können;
mindestens ein Überbrückungselement (54, 94), das sich zwischen einem Wurzelrahmenelement (30, 92) eines Blattstapels und einem Wurzelrahmenelement (30) eines benachbarten Blattstapels erstreckt, um die Blattstapel seitlich nebeneinander zu befestigen;
mindestens ein Querspannelement (100), das sich diagonal über diagonal benachbarte Wurzelrahmenelemente (30, 92) benachbarter Blattstapel erstreckt und mit den diagonal benachbarten Wurzelrahmenelementen (30, 92) der benachbarten Blattstapel gekoppelt ist, um die Steifigkeit der Blattstapel in der gestapelten Anordnung (62, 90) zu erhöhen, und wobei mindestens ein Wurzelrahmenelement (30, 92) mit mehreren diagonal benachbarten Wurzelrahmenelementen (30, 92) durch Querspannelemente (100) gekoppelt ist, wobei mindestens ein Wurzelrahmenelement (30, 92) mit mehreren diagonal benachbarten Rahmenelementen (30, 92) mehrerer benachbarter Blattstapel durch Querspannelemente (100) gekoppelt ist, wobei das System **dadurch gekennzeichnet ist, dass** sich das Querspannelement (100) diagonal über die Wurzelrahmenelemente (30, 92) von mindestens zwei benachbarten Blattstapeln erstreckt, um mindestens zwei benachbarte Wurzelrahmenelemente (32, 90) diagonal miteinander zu koppeln, und ein Wurzelrahmenelement (30, 92) einer Anordnung (90) ein Querspannelement (100) einschließt, das sich mit einem oder mehreren anderen Querspannelementen (100) überlappt, die an dem Wurzelrahmenelement (30, 92) befestigt sind.

2. System nach Anspruch 1, wobei die Querspannelemente (100) geeignet starke Metallelemente sind, wie z. B. Seile oder Kettenstücke.

3. System nach einem der Ansprüche 1 bis 2, wobei ein Wurzelrahmenelement (30, 92) einer Anordnung (62, 90) mit vier anderen diagonal benachbarten Rahmenelementen (30, 92) in einer Anordnung mittels Querspannelementen (100) gekoppelt ist, die sich nur diagonal über zwei benachbarte Blattstapel erstrecken.

4. System nach einem der vorstehenden Ansprüche, wobei das System weiter eine Vielzahl von Spitzenrahmenelementen (20, 52) umfasst, die so konfiguriert sind, dass sie einen Abschnitt eines Windkraftanlagenblatts entlang der Länge des Blatts tragen, wobei die Spitzenrahmenelemente (20, 52) übereinander gestapelt sind, um eine Vielzahl von Spitzenrahmenstapeln zu bilden, die nebeneinander positioniert sind, so dass Windkraftanlagenblätter in einer gestapelten Anordnung (60) getragen werden können;
wobei das System weiter eine Vielzahl von stabilisierenden Rahmenelementen (50a) umfasst, die übereinander gestapelt sind, um mindestens einen Stabilisierungsstapel (50) zu bilden;
wobei der mindestens eine Stabilisierungsstapel (50) zwischen mindestens zwei Spitzenrahmenstapeln (52) positioniert und seitlich an den Spitzenrahmenstapeln (52) nebeneinander befestigt ist, um die gestapelte Anordnung (60) zu stabilisieren; wobei das System bevorzugt eine Vielzahl von Stabilisierungsstapeln (50) umfasst, wobei jeder Stabilisierungsstapel (50) zwischen mindestens zwei Spitzenrahmenstapeln (52) positioniert und seitlich an den Spitzenrahmenstapeln (52) nebeneinander befestigt ist.

5. System nach Anspruch 4, wobei mindestens ein Stabilisierungsrahmen (50a) durch mindestens ein diagonales Spannelement (80) gebildet wird, das sich über einen Abschnitt des Stabilisierungsrahmenelements (50a) erstreckt, um die Steifigkeit des Stabilisierungsrahmenelements (50a) zu erhöhen.

6. Verfahren zum Transportieren einer gestapelten Anordnung (62, 90) von Windkraftanlagenblättern (74) mit Hilfe eines Systems nach einem vorstehenden Anspruch, wobei das Verfahren umfasst:
Befestigen von Blättern (74) in einer Vielzahl von Stapeln, wobei ein Abschnitt jedes Blattes in einem Blattwurzelrahmenelement (30, 92) getragen wird, wobei die Blattrahmenelemente übereinander gestapelt sind, um eine Vielzahl von Blattstapeln zu bilden;
Positionieren der Blattstapel nebeneinander, um eine gestapelte Anordnung (62, 90) von Blättern (74) zu bilden;
Koppeln mindestens eines Wurzelrahmenelements (92) der Anordnung (62, 90) mit einem oder mehreren diagonal benachbarten Rahmenelementen (30, 92) durch Querspannelemente (100).

7. Verfahren nach Anspruch 6, wobei die Querspannelemente (100) zwischen benachbarten Wurzelrahmenelementen (30, 92) befestigt sind, um die Steifigkeit der gesamten Anordnung (62, 90) zu erhöhen, und nicht an einer Tragfläche wie einem Deck (98) befestigt sind.

8. Verfahren nach Anspruch 7, wobei die Anordnung (62, 90) an dem Deck (98) durch Befestigungselemente befestigt wird, die zusätzlich zu den mit den Wurzelrahmen (30, 92) verbundenen diagonalen Querspannelementen (100) vorhanden sind.

9. Verfahren nach einem der Ansprüche 6 bis 8, weiter umfassend:
Befestigen einer Vielzahl von Stabilisierungsrahmenelementen (50a) übereinander in einem Stapel, um mindestens einen Stabilisierungsstapel (50) zu bilden;
Positionieren mindestens eines Stabilisierungsstapels (50) zwischen mindestens zwei Spitzenrahmenstapeln (52) der Anordnung (20) und seitliches Befestigen des Stabilisierungsstapels (50) an den Spitzenrahmenstapeln (52) nebeneinander zum Stabilisieren der gestapelten Anordnung (60); und
seitliche Befestigung der benachbarten Spitzenrahmenstapel (52) und Stabilisierungsstapel (50) nebeneinander.

10. Verfahren nach Anspruch 9, weiter umfassend:
Befestigen eines ersten Satzes von Blättern (74) in einer Vielzahl von Stapeln (52), wobei ein Abschnitt jedes Blattes in einem Blattrahmenelement (52a) getragen wird, wobei die Blattrahmenelemente (52a) übereinander gestapelt sind, um eine erste Anordnung (60) der Vielzahl von Blattstapeln (52) zu bilden;
Befestigen einer Vielzahl von stabilisierenden Rahmenelementen (50a) übereinander in einem Stapel, um mindestens einen Stabilisierungsstapel (50) zu bilden, und Positionieren und Befestigen mindestens eines Stabilisierungsstapels (50) zwischen mindestens zwei Blattstapeln (52) der ersten Anordnung (60) nebeneinander zum Stabilisieren der ersten Anordnung;
Befestigen eines zweiten Satzes von Blättern (74) in einer Vielzahl von Stapeln, wobei ein Abschnitt jedes Blattes in einem Blattrahmenelement (52a) getragen wird, wobei die Blattrahmenelemente übereinander gestapelt sind, um eine zweite Anordnung (60) der Vielzahl von Blattstapeln zu bilden;
Ausrichten der zweiten Anordnung, so dass die Spitzen der Blätter (74) des zweiten Satzes von Blättern in stabilisierenden Rahmenelementen (50a) der ersten Anordnung positioniert sind; und weiter umfassend:
Befestigen einer Vielzahl von stabilisierenden Rahmenelementen (50a) übereinander in Stapeln, um mindestens einen Stabilisierungsstapel (50) zu bilden, und Positionieren und Befestigen mindestens eines Stabilisierungsstapels (50) zwischen mindestens zwei Blattstapeln der zweiten Anordnung nebeneinander zum Stabilisieren des zweiten Anordnung;
Ausrichten der ersten Anordnung, so dass die Spitzen der Blätter (74) des ersten Satzes von Blättern in den stabilisierenden Rahmenelementen (50a) der zweiten Anordnung positioniert sind.

11. Verfahren nach einem der Ansprüche 6-10, wobei das Verfahren das Befestigen von Blättern (74) in einer Vielzahl von Stapeln, die eine Stapelhöhe von vier oder mehr Blättern aufweisen, und das Positionieren der Blattstapel (52) nebeneinander, um eine gestapelte Anordnung (60, 62, 90) mit einer Höhe von vier oder mehr Blättern zu bilden, einschließt.

## Revendications

1. Système pour le transport d'une pluralité de pales d'éolienne comprenant :
une pluralité d'éléments de cadre de racine (30, 92) qui sont configurés pour le support d'une partie de racine d'une pale d'éolienne, les éléments de cadre de racine (30, 92) étant empilés les uns sur les autres pour former une pluralité de piles de pales qui sont positionnées d'une manière côte à côte les unes par rapport aux autres afin que des pales d'éolienne puissent être supportées dans un réseau empilé (62, 90) ;
au moins un élément de pontage (54, 94) s'étendant entre un élément de cadre de racine (30, 92) d'une pile de pales et un élément de cadre de racine (30) d'une pile de pales adjacente pour la fixation latérale des piles de pales de la manière côte à côte ;
au moins un élément d'arrimage transversal (100) s'étendant en diagonale sur des éléments de cadre de racine (30, 92) adjacents en diagonale et couplé aux éléments de cadre de racine (30, 92) adjacents en diagonale des piles de pales adjacentes pour augmenter la rigidité des piles de pales dans le réseau empilé (62, 90), et dans lequel au moins un élément de cadre de racine (30, 92) est couplé à de multiples éléments de cadre de racine adjacents en diagonale (30, 92) par des éléments d'arrimage transversal (100), dans lequel au moins un élément de cadre de racine (30, 92) est couplé à de multiples éléments de cadre (30, 92) adjacents en diagonale de multiples piles de pales adjacentes par des éléments d'arrimage transversal (100), le système est **caractérisé en ce que** l'élément d'arrimage transversal (100) s'étend en diagonale sur des éléments de cadre de racine (30, 92) d'au moins deux piles de pales adjacentes pour coupler au moins deux éléments de cadre de racine adjacents (32, 90) ensemble en diagonale et un élément de cadre de racine (30, 92) d'un réseau (90) inclut l'élément d'arrimage transversal (100) qui se superpose avec un ou plusieurs autres éléments d'arrimage transversal (100) fixés audit élément de cadre de racine (30, 92).

2. Système selon la revendication 1, dans lequel lesdits éléments d'arrimage transversal (100) sont des éléments métalliques suffisamment solides tels que des câbles ou des longueurs de chaîne.

3. Système selon l'une quelconque des revendications 1 à 2, dans lequel un élément de cadre de racine (30, 92) d'un réseau (62, 90) est couplé à quatre autres éléments de cadre adjacents en diagonale (30, 92) dans un réseau au moyen d'éléments d'arrimage transversal (100) qui s'étendent seulement en diagonale sur deux piles de pales adjacentes.

4. Système selon une quelconque revendication précédente, ledit système comprenant en outre une pluralité d'éléments de cadre de pointe (20, 52) configurés pour supporter une portion d'une pale d'éolienne le long de la longueur de la pale, lesdits éléments de cadre de pointe (20, 52) étant empilés les uns sur les autres pour former une pluralité de piles de cadres de pointe qui sont positionnées d'une manière côte à côte les unes par rapport aux autres afin que les pales d'éolienne puissent être supportées dans un réseau empilé (60) ;
ledit système comprenant en outre une pluralité d'éléments de cadre de stabilisation (50a) empilés les uns sur les autres pour former au moins une pile de stabilisation (50) ;
la au moins une pile de stabilisation (50) étant positionnée entre au moins deux piles de cadres de pointe (52) et fixée latéralement aux piles de cadres de pointe (52) d'une manière côte à côte pour la stabilisation du réseau empilé (60) ; ledit système comprenant de préférence une pluralité de piles de stabilisation (50), chaque pile de stabilisation (50) étant positionnée entre au moins deux piles de cadres de pointe (52) et fixée latéralement aux piles de cadres de pointe (52) d'une manière côte à côte.

5. Système selon la revendication 4, dans lequel ledit au moins un cadre de stabilisation (50a) est formé par au moins un élément d'arrimage en diagonale (80) qui s'étend sur une portion de l'élément de cadre de stabilisation (50a) pour augmenter la rigidité de l'élément de cadre de stabilisation (50a).

6. Procédé de transport d'un réseau empilé (62, 90) de pales d'éolienne (74) au moyen d'un système selon une quelconque revendication précédente, ledit procédé comprenant les étapes consistant à :
fixer les pales (74) dans une pluralité de piles avec une portion de chaque pale supportée dans un élément de cadre de racine de pale (30, 92), les éléments de cadre de pale étant empilés les uns sur les autres pour former une pluralité de piles de pales ;
positionner les piles de pales d'une manière côte à côte les unes par rapport aux autres pour former un réseau empilé (62, 90) de pales (74) ;
coupler au moins un élément de cadre de racine (92) dudit réseau (62, 90) avec un ou plusieurs éléments de cadre (30, 92) adjacents en diagonale par des éléments d'arrimage transversal (100).

7. Procédé selon la revendication 6, dans lequel lesdits éléments d'arrimage transversal (100), fixés entre des éléments de cadre de racine adjacents (30, 92) pour augmenter la rigidité du réseau global (62, 90), et ne sont pas fixés à une surface de support telle qu'un pont (98).

8. Procédé selon la revendication 7, dans lequel ledit réseau (62, 90) est fixé à un dit pont (98) par des éléments de fixation qui sont additionnels auxdits arrimages transversaux (100) diagonaux couplés auxdits cadres de racine (30, 92).

9. Procédé selon l'une quelconque des revendications 6-8, comprenant en outre les étapes consistant à :
fixer une pluralité d'éléments de cadre de stabilisation (50a) les uns sur les autres dans une pile pour former au moins une pile de stabilisation (50) ;
positionner au moins une pile de stabilisation (50) entre au moins deux piles de cadres de pointe (52) du réseau (20), et fixer latéralement la pile de stabilisation (50) aux piles de cadres de pointe (52) d'une manière côte à côte pour la stabilisation du réseau empilé (60) ; et
fixer latéralement les piles de cadres de pointe adjacentes (52) et stabiliser les piles (50) d'une manière côte à côte.

10. Procédé selon la revendication 9, comprenant en outre l'étape consistant à :
fixer un premier ensemble de pales (74) dans une pluralité de piles (52) avec une portion de chaque pale supportée dans un élément de cadre de pale (52a), les éléments de cadre de pale (52a) étant empilés les uns sur les autres pour former un premier réseau (60) de la pluralité de piles de pales (52) ;
fixer une pluralité d'éléments de cadre de stabilisation (50a) les uns sur les autres dans une pile pour former au moins une pile de stabilisation (50) et positionner et fixer au moins une pile de stabilisation (50) entre au moins deux piles de pales (52) du premier réseau (60) d'une manière côte à côte pour la stabilisation du premier réseau ;
fixer un second ensemble de pales (74) dans une pluralité de piles avec une portion de chaque pale supportée dans un élément de cadre de pale (52a), les éléments de cadre de pale étant empilés les uns sur les autres pour former un second réseau (60) de la pluralité de piles de pales ;
orienter le second réseau de sorte que des pointes de pales (74) du second ensemble de pales soient positionnées dans des éléments de cadre de stabilisation (50a) du premier réseau ; et comprenant en outre l'étape consistant à :
fixer une pluralité d'éléments de cadre de stabilisation (50a) les uns sur les autres dans des piles pour former au moins une pile de stabilisation (50) et positionner et fixer au moins une pile de stabilisation (50) entre au moins deux piles de pales du second réseau d'une manière côte à côte pour la stabilisation du second réseau ;
orienter le premier réseau de sorte que des pointes de pales (74) du premier ensemble de pales soient positionnées dans des éléments de cadre de stabilisation (50a) du second réseau.

11. Procédé selon l'une quelconque des revendications 6-10, ledit procédé incluant la fixation de pales (74) dans une pluralité de piles qui présentent une hauteur de pile de quatre pales ou plus ; et le positionnement des piles de pales (52) d'une manière côte à côte les unes par rapport aux autres pour former un réseau empilé (60, 62, 90) présentant une hauteur de quatre pales ou plus.
